(19) Europäisches Patentamt / European Patent Office / Office européen des brevets

(11) **EP 3 754 380 A2**

(12) **EUROPEAN PATENT APPLICATION**

(43) Date of publication:
**23.12.2020  Bulletin 2020/52**

(51) Int Cl.:
**G01S 19/21** (2010.01)        **G01S 19/36** (2010.01)
**H04B 7/04** (2017.01)

(21) Application number: **20020107.7**

(22) Date of filing: **06.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **07.03.2019   US 201916296146**
**07.06.2019   US 201916435452**

(71) Applicant: **Piper, John**
**Panama City Beach, FL 32408 (US)**

(72) Inventor: **Piper, John**
**Panama City Beach, FL 32408 (US)**

(74) Representative: **Jordan, Volker Otto Wilhelm**
**Weickmann & Weickmann**
**Patent- und Rechtsanwälte PartmbB**
**Richard-Strauss-Straße 80**
**81679 München (DE)**

(54) **METHOD FOR COMPLETE SPATIAL SEPARATION OF WIRELESS SIGNALS**

(57)    Effective signal separation is an important function in wireless communications and global navigation satellite systems (GNSS). This invention provides a method for complete spatial separation of signals using a novel array processing technique. The technique uses the Moore-Penrose inverse to put each signal into its own dimensional space where they are completely separated or decoupled from the other signals. This works even in large interference or jamming environments and is the result of an inner product metric matrix whose off-diagonal terms provide the exact decoupling when applied to traditional array processing outputs.

Direction of Arrival of Signals:
all = {$d_1$, $d_2$, ... , $d_N$}
valid = {$d_1$, $d_2$, ... , $d_{N-I}$}
interference = {$d_{N-I+1}$, ... , $d_N$}

Define Antenna Array Geometry:
{ 0, $x_2$, $x_3$, ... , $x_M$ }

Calculate Signal Delays:
$$\Delta_{i,j} = x_i \cdot d_j / c$$

Construct Steering Matrix:
$$D = \begin{pmatrix} 1 & 1 & 1 & \cdots & 1 \\ \Delta_{12} & \Delta_{22} & \Delta_{32} & & \Delta_{N2} \\ \Delta_{13} & \Delta_{23} & \Delta_{33} & & \Delta_{N3} \\ \vdots & \vdots & \vdots & & \vdots \\ \Delta_{1M} & \Delta_{2M} & \Delta_{3M} & \cdots & \Delta_{NM} \end{pmatrix}$$

Construct Moore-Penrose Beamformer:
$$Z = (D^\dagger D)^{-1} D^\dagger$$

FIG. 1

EP 3 754 380 A2

## Description

The present technology is related to a new method for complete spatial separation of wireless signals and specifically to how this method is able to solve known problems in global navigation satellite systems and known problems in the reception and transmission of wireless communication signals.

## BACKGROUND OF THE INVENTION

Wireless signals make possible radio, television, wireless communications, and satellite navigation. Radio and television make use of different frequency allocations to simply separate the various signals. Wireless communications use frequency division and time division and code division and combinations of these methods to allow for ever-increasing demand. Satellite navigation primarily depends on coded signals using the same frequency that identify each satellite or space vehicle (SV).

The ever-increasing demand for mobile communications has led to research into spatial separation. Wireless communication base station towers typically have three sets of antennas whose directionality provides a form of spatial separation. The three areas around the tower are described as cells. A network of towers is designed to provide continuous coverage from cell to cell. Multiple users within each cell are continuously allocated various frequency bins and time slots for voice and data. It is possible to increase capacity within each cell by efficient spatial separation of users with the use of an array of antennas. This is discussed by Roy in Spatial Division Multiple Access Technology and Its Application to Wireless Communication Systems, 1997 47th Vehicular Technology Conference, Phoenix. Implementation of a high-resolution spatial separation system has not yet occurred, although there is research into a massive MIMO (multiple in multiple out) approach. MIMO is currently used in IEEE standards but is fundamentally different than this invention.

Satellite navigation depends on low strength signals coming from high orbit SVs.

The weakness of these signals is a vulnerability that allows the signals to be easily interfered or jammed or spoofed from nearby transmitters which can produce strong signals at the SV frequencies. This is a very significant and a very real problem for both navigation purposes and precise timing functions used in financial transactions and in wireless communications. The problem is described in Michael Jones, The Civilian Battlefield: Protecting GNSS Receivers from Interference and Jamming, Inside GNSS, March/April 2011. Many publications and patents attempt to address these problems. The majority of these attempts use spatial separation methods that place a null in the array beampattern in the direction of the interference by introducing time delays or phase shifts or complex weights for different antenna inputs to produce the desired result. This null cancellation approach is seen as suboptimal.

## SUMMARY OF THE INVENTION

Antenna array processing has a history that goes back over 100 years and is still an active area of research interest. It is a vast subject that has applications in detection, imaging, and communications. Spatial separation methods used are typically called beamforming. The essence of beamforming is to focus the beam in the desired direction and not allow signals from undesired directions. The fundamental problem with conventional array processing is that a beam pointed in one direction can allow leakage from signals from other directions due to sidelobes in the beampattern. Sometimes a null in the beampattern can be placed in the direction of another signal to cancel it, but this is not the general case and is seen as suboptimal.

The novelty of this invention is that it approaches the beamforming problem as an inverse problem. The signals of interest are mapped through various delays onto the antenna array. So, what is measured are the outputs of the antenna array. To untangle the signals of interest requires inverting this process correctly. The result of this approach are signals of interest that are in their own dimensional space and completely separated or decoupled from the other signals.

This method begins by constructing a mathematical model that explicitly assumes N signals, $s(t)$, are received by an array of M antennae. This mapping can be mathematically represented by the following equation:

$$\begin{pmatrix} a_1(t) \\ a_2(t) \\ a_3(t) \\ \vdots \\ a_M(t) \end{pmatrix} = \begin{pmatrix} 1 & 1 & 1 & \cdots & 1 \\ \Delta_{12} & \Delta_{22} & \Delta_{32} & & \Delta_{N2} \\ \Delta_{13} & \Delta_{23} & \Delta_{33} & & \Delta_{N3} \\ \vdots & \vdots & \vdots & \cdots & \vdots \\ \Delta_{1M} & \Delta_{2M} & \Delta_{3M} & & \Delta_{NM} \end{pmatrix} \begin{pmatrix} s_1(t) \\ s_2(t) \\ s_3(t) \\ \vdots \\ s_N(t) \end{pmatrix}$$

Where,

$S_j(t) = $ jth signal
$a_k(t) = $ kth antenna output
$\Delta_{jk} = $ mapping (delay) of jth signal onto kth antenna

Inspection of the above equation shows that every antenna will receive all the signals at various delays. To correctly separate this tangle of signals it is necessary to invert the above equation. The Moore-Penrose inverse can perform the inversion in a least-squares sense.

It is convenient to call the signal vector, s, the antenna vector, a, and the mapping or delay or steering matrix, D. the above equation can then be compactly written as:

$$a = D\,s$$

The Moore-Penrose inverse then requires the above equation be left multiplied by $D^\dagger$, the Hermitian (complex conjugate transpose) of D.

$$D^\dagger a = D^\dagger D\,s$$

This equation is then left multiplied by $(D^\dagger D)^{-1}$ which yields the signal vector from the measured antenna outputs.

$$s = (D^\dagger D)^{-1} D^\dagger a$$

It is important to note that in this representation all of the signals are effectively in their own dimensional space and are completely decoupled from other signals. Traditional array processing is based on simply steering the array towards the direction of interest, which is what the $D^\dagger a$ term does. This method additionally includes the $(D^\dagger D)^{-1}$ term which mathematically separates the signals and can be thought of as an inner product metric. In practical terms it can be thought of as a two-dimensional matrix of amplitudes and phase shifts or delays that are applied to the $D^\dagger a$ vector. The $(D^\dagger D)^{-1}$ term is effectively an extension of traditional methods and the essential inventive step.

It should also be noted that the above equation is functionally similar in form to MIMO methods. Both representations have a matrix operate on the antenna vector, a. to produce the signal vector, s. The main difference is that MIMO uses an estimated channel state matrix, and this method uses a matrix constructed from the Moore-Penrose inverse of the steering matrix, D.

The advantages and objects of the present invention will become apparent from the following detailed disclosure showing three embodiments for satellite navigation, reception of wireless signals, and transmission of wireless signals.

## BRIEF DESCRIPTION OF THE DRAWINGS

In order to help describe the main features of the methods of this disclosure, four figures are provided. These represent various inputs and steps necessary to completely separate the signals of interest. The first figure describes the general method to construct the Moore-Penrose beamformer. The second figure is a specific embodiment for decoupling satellite navigation signals. The third figure is a specific embodiment for the decoupling of signals in wireless communication reception. The fourth figure is a specific embodiment for the decoupling of signals in wireless communication transmission. These figures will be described and explained with additional detail in the following detailed description of the invention. The best captions for the figures are as follows:

FIG. 1 Construction of Moore-Penrose Beamformer
FIG. 2 Spatial Separation of Satellite Signals
FIG. 3 Spatial Separation for Wireless Signal Reception
FIG. 4 Spatial Separation for Wireless Signal Transmission

## DETAILED DESCRIPTION OF THE INVENTION

Three main embodiments of the disclosed methods are discussed in this section. A person skilled in the relevant art will recognize that other components, configurations, and steps may be used without parting from the spirit and scope of the disclosure.

Global Navigation Satellite Systems

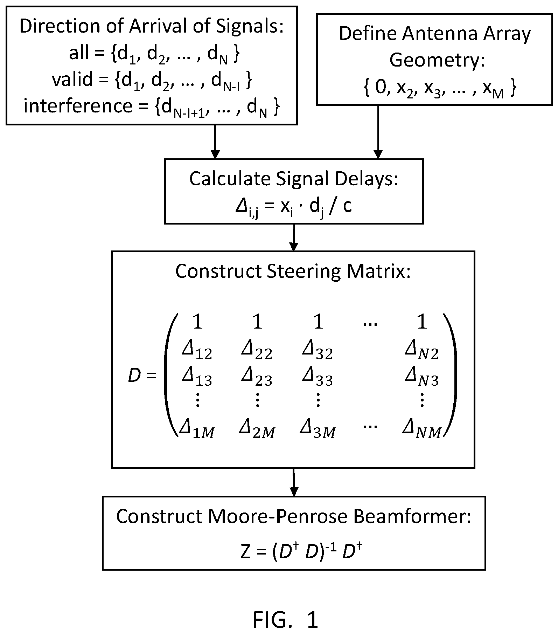

The present invention provides for a method to spatially separate multiple signals that are important for navigation systems while effectively cancelling unwanted interference signals. This method uses the Moore-Penrose inverse to spatially decouple all of the signals into orthogonal signal spaces. These include both the valid SV signals and any other signals at that frequency coming from other directions. The Moore-Penrose inverse is effectively a matrix of complex weights for the antenna inputs which form independent beams to recover the signals in the various directions. In this application it can be thought of as the Moore-Penrose beamformer and is described in Fig. 1.

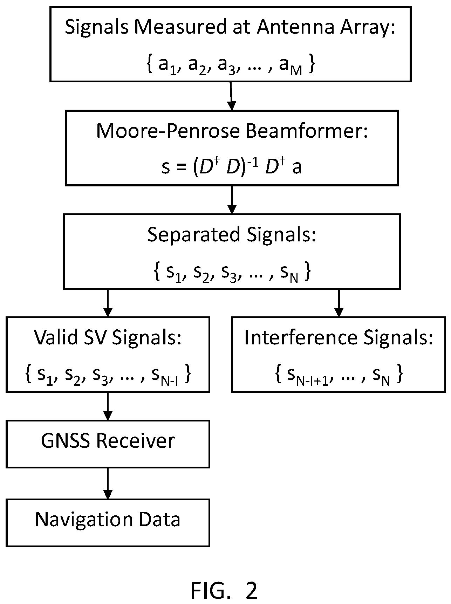

The general method for satellite navigation is described in Fig. 2. The direction of arrival of the multiple signals are assumed to be known. The positions of the SVs are very accurately known through broadcasts of their almanac and ephemeris. The interfering signals directions of arrival can be determined through a number of techniques. Fortunately, the stronger the interfering signal is the more accurately its direction can be determined. In some cases, the direction of the interference may be known a priori.

For N signals of interest, the direction-of-arrival unit vectors, $\{ d_1, d_2, ... , d_N \}$, can be divided into *N-I* valid GPS signals, $\{ d_1, d_2, ... , d_{N-I} \}$, and *I* interference signals, $\{ d_{N-I}+1, ... , d_N \}$. It should be noted that the valid GNSS signals can also include augmented ground-based signals such as DGPS and aircraft landing systems.

For M antennae in the array, it is convenient to refer to the first antenna as the origin. The geometry of the array can then be specified as $\{ 0, x_2, x_3, ... , x_M \}$ where the x vectors indicate the direction and distance from the origin.

Each antenna receives information from all the signals. Multiple antennae form an array. Arrays are useful since they increase the information content which leads to better signal-to-noise ratios and through the use of forming directional beams. It has been shown that the maximum number of resolvable signals by an array is *M*, the number of antennas. This is an important consideration for the system designer.

The time delay, $\Delta_{i,j}$, associated with the jth signal onto the ith antenna is simply the dot product of the signal unit direction vector, dj, and the antenna geometry vector, $x_i$, divided by the speed of light, c:

$$\Delta_{i,j} = x_i \cdot d_j \, / \, c$$

These time delays are used to construct the steering matrix:

$$D = \begin{pmatrix} 1 & 1 & 1 & \cdots & 1 \\ \Delta_{12} & \Delta_{22} & \Delta_{32} & & \Delta_{N2} \\ \Delta_{13} & \Delta_{23} & \Delta_{33} & & \Delta_{N3} \\ \vdots & \vdots & \vdots & & \vdots \\ \Delta_{1M} & \Delta_{2M} & \Delta_{3M} & \cdots & \Delta_{NM} \end{pmatrix}$$

The Moore-Penrose inverse, Z, can then be constructed from the steering matrix:

$$Z = (D^\dagger D)^{-1} D^\dagger$$

Separating the signals from the antenna array data is the job of the Moore-Penrose inverse. Mathematically, the vector of the individual signals, *s*, is obtained by multiplying the Moore-Penrose inverse matrix, Z, and the vector of the individual antenna outputs, *a*. This is a dynamic process since the signals vary with time.

$$\begin{pmatrix} s_1(t) \\ s_2(t) \\ s_3(t) \\ \vdots \\ s_N(t) \end{pmatrix} = Z \begin{pmatrix} a_1(t) \\ a_2(t) \\ a_3(t) \\ \vdots \\ a_M(t) \end{pmatrix}$$

Thus, the first signal stream is simply the complex weights of the first row of the Moore-Penrose inverse matrix times the outputs of the antenna array vector. The second signal stream is simply the complex weights of the second row of the Moore-Penrose inverse matrix times the outputs of the antenna array vector. The third signal stream is simply the complex weights of the third row of the Moore-Penrose inverse matrix times the outputs of the antenna array vector. And so forth until all the valid GNSS signals are calculated. These multiply and add operations can be easily performed using dedicated digital signal processing chips.

The above method assumes the signals are narrowband and the time delays can be approximated using phase shifts. Alternatively, it is possible to use the time shift operations in the separation of the signals.

The valid GNSS signals are then fed into the GNSS receiver which calculates the navigation data. Since the GNSS signals are already spatially separated, the normal GNSS receiver function of separating the signals based on near-orthogonal gold codes is not required. By skipping this function, it is possible to save a lot of calculations and thereby acquire a navigation solution much faster.

Although this embodiment has been described, workers skilled in the art will recognize that changes may be made in form and detail without departing from the spirit and scope of the embodiment. For example, references to the GNSS are also intended to include terrestrial navigation signals used to augment the satellite signals.

Reception of Wireless Communication Signals

The present invention also provides for a method to spatially separate multiple signals in wireless communication receive and transmit systems. Complete separation of these signals again requires a novel method that utilizes the Moore-Penrose inverse to spatially decouple all of the signals into orthogonal signal spaces. These include both the valid communication signals and any other signals at that frequency coming from other defined directions.

Signal separation is important in a variety of communication systems. An important example is the communication between cell phones and base stations. The base station is designed to both receive and transmit signals to multiple cell phones. Likewise, military communications would benefit by spatially separating multiple signals, especially jamming signals on receive and only transmit in specific directions and not others. Internet routers can also enhance signals to multiple devices using this method.

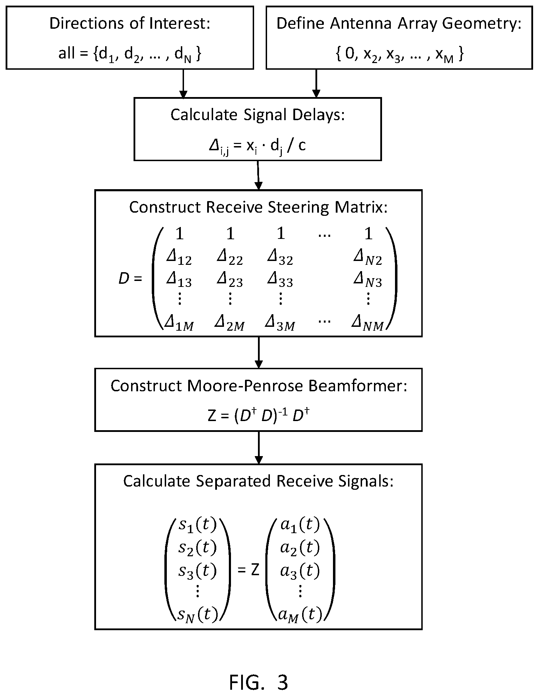

In a multiple signal environment best results can only be obtained by starting with a multiple signal model. Details of this method for reception are shown in the flow diagram labeled Fig. 3. Here it is assumed that there are $N$ signals, $\{\, s_1, s_2, \ldots , s_N \,\}$, measured by an array of $M$ antenna. It is assumed that there are $N$-$I$ valid signals, $\{\, s_1, s_2, \ldots , s_{N-I} \,\}$, and signals $N$-$I$+1 through $N$, $\{\, s_{N-I+1}, \ldots , s_N \,\}$, are assumed to be unwanted interference signals, multipath signals, or out-of-cell signals.

It is assumed that the N directions of arrival of the signals are known. The direction-of-arrival unit vectors, $\{\, d_1, d_2, \ldots , d_N \,\}$, can be divided into $N$-$I$ valid signals, $\{\, d_1, d_2, \ldots , d_{N-I} \,\}$, and $I$ unwanted interference signals, $\{\, d_{N-I+1}, \ldots , d_N \,\}$. The direction of arrival of the signals may be known from the GNSS location of the cell phones, by traditional direction-of-arrival techniques determined by the antenna array, or perhaps the directions of arrival are known a priori.

For $M$ antennae in the array, it is convenient to refer to the first antenna as the origin. The geometry of the array can then be specified as $\{\, 0, x_2, x_3, \ldots , x_M \,\}$ where the x vectors indicate the direction and distance from the origin to the antennae in the array. It is an important consideration for the system designer that the maximum number of spatially resolvable signals by an array is the number of antennae, $M$.

The time delay, $\Delta_{i,j}$, associated with the $j^{th}$ signal onto the $i^{th}$ antenna is simply the dot product of the signal unit direction vector, dj, and the antenna geometry vector, $x_i$, divided by the speed of light:

$$\Delta_{i,j} = x_i \cdot d_j \, / \, c$$

It should be noted that the time delays should be thought of as operators. Their operation is to shift the measured signals in time. It is possible to do this using analog techniques. It is also possible to do this in the digital domain. This is discussed by Piper in Exact and Approximate Time-Shift Operators, SPIE DSS, 2009, Orlando. If the signals are narrowband, then the time shifts are typically expressed as phase shifts.

These time delays are used to construct the steering matrix:

$$D = \begin{pmatrix} 1 & 1 & 1 & \cdots & 1 \\ \Delta_{12} & \Delta_{22} & \Delta_{32} & & \Delta_{N2} \\ \Delta_{13} & \Delta_{23} & \Delta_{33} & & \Delta_{N3} \\ \vdots & \vdots & \vdots & \cdots & \vdots \\ \Delta_{1M} & \Delta_{2M} & \Delta_{3M} & \cdots & \Delta_{NM} \end{pmatrix}$$

The Moore-Penrose inverse, Z, can then be constructed from the steering matrix:

$$Z = (D^\dagger D)^{-1} D^\dagger$$

Separating the signals from the antenna array data is the job of the Moore-Penrose inverse. Mathematically, the vector of the individual signals, *s*, is obtained by multiplying the Moore-Penrose inverse matrix, Z, and the vector of the individual antenna outputs, *a*.

$$\begin{pmatrix} s_1(t) \\ s_2(t) \\ s_3(t) \\ \vdots \\ s_N(t) \end{pmatrix} = Z \begin{pmatrix} a_1(t) \\ a_2(t) \\ a_3(t) \\ \vdots \\ a_M(t) \end{pmatrix}$$

Thus, the first signal stream is simply the elements of the first row of the Moore-Penrose inverse matrix times the outputs of the antenna array vector. The second signal stream is simply the elements of the second row of the Moore-Penrose inverse matrix times the outputs of the antenna array vector. The third signal stream is simply the elements of the third row of the Moore-Penrose inverse matrix times the outputs of the antenna array vector. And so forth until all the communication signals are calculated. These multiply and add operations can be easily performed using dedicated DSP or FPGA chips.

Since only the valid signals are generally desired, { $s_1$, $s_2$, ... , $s_{N-I}$ }, it is possible to eliminate the calculations associated with the unwanted signals by only calculating the desired signals. This is accomplished by observing that only the first *N-I* rows of the Moore-Penrose inverse matrix, Z, are required for this calculation. Thus, the Z matrix can be partitioned to only include the first *N-I* rows. This partitioned matrix, $Z_{N-IxM}$, reduces the computational costs by computing only the desired signals.

$$\begin{pmatrix} s_1(t) \\ s_2(t) \\ s_3(t) \\ \vdots \\ s_{N-I}(t) \end{pmatrix} = Z_{N-IxM} \begin{pmatrix} a_1(t) \\ a_2(t) \\ a_3(t) \\ \vdots \\ a_M(t) \end{pmatrix}$$

Transmission of Wireless Communication Signals

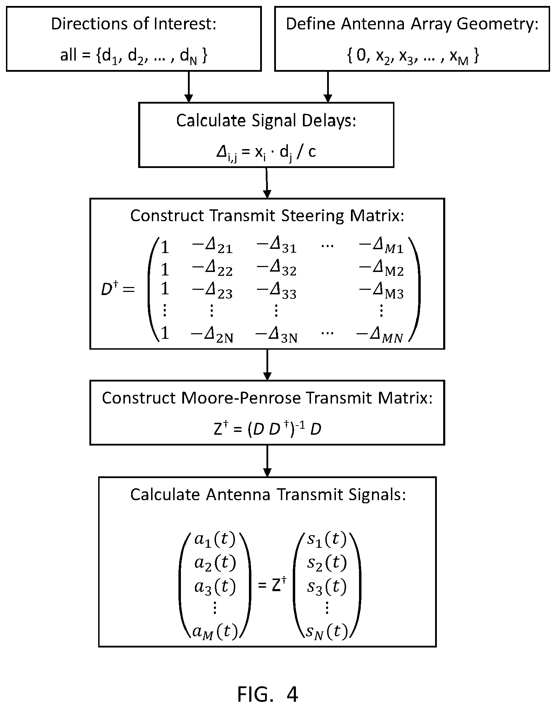

The method for transmission of signals can be thought of as the functional inverse of the reception of signals. Details of this method for transmission are shown in the flow diagram labeled Fig. 4. Again, it is assumed that there are *N* signals, { $s_1$, $s_2$, ... , $s_N$ }, to be transmitted by an array of *M* antennae. It is assumed that there are *N-I* specific signals to be transmitted, { $s_1$, $s_2$, ... , $s_{N-I}$ }, and signals *N-I*+1 through *N*, { $s_{N-I+1}$, ... , $s_N$ }, are effectively null signals to be transmitted into directions where no signal is desired. These directions can correspond to other users inside or outside the cell.

It is assumed that the *N* directions of transmission of the signals are known. The direction-of-transmission unit vectors, { $d_1$, $d_2$, ... , $d_N$ }, can be divided into *N-I* specific signals, { $d_1$, $d_2$, ... , $d_{N-I}$ }, and *I* null signals, { $d_{N-I+1}$, ... , $d_N$ }.

For the *M* antennae in the array, it is convenient to refer to the first antenna as the origin. The geometry of the array can then be specified as { 0, $x_2$, $x_3$, ... , $x_M$ } where the x vectors indicate the direction and distance from the origin to the antennae in the array.

The time delay, $\Delta_{i,j}$, associated with the jth signal from the ith antenna is simply the dot product of the signal unit direction vector, dj, and the antenna geometry vector, $x_i$, divided by the speed of light:

$$\Delta_{i,j} = x_i \cdot d_j / c$$

These time delays are used to construct the transmission steering matrix:

$$D^{\dagger} = \begin{pmatrix} 1 & -\Delta_{21} & -\Delta_{31} & \dots & -\Delta_{M1} \\ 1 & -\Delta_{22} & -\Delta_{32} & & -\Delta_{M2} \\ 1 & -\Delta_{23} & -\Delta_{33} & & -\Delta_{M3} \\ \vdots & \vdots & \vdots & & \vdots \\ 1 & -\Delta_{2N} & -\Delta_{3N} & \dots & -\Delta_{MN} \end{pmatrix}$$

This matrix is the adjoint of the *D* matrix and maps the antenna array outputs to the signals projected or transmitted into the specified directions:

$$\begin{pmatrix} s_1(t) \\ s_2(t) \\ s_3(t) \\ \vdots \\ s_N(t) \end{pmatrix} = D^{\dagger} \begin{pmatrix} a_1(t) \\ a_2(t) \\ a_3(t) \\ \vdots \\ a_M(t) \end{pmatrix}$$

In the transmission case the directions and signals are known. So, in order to solve for the antenna array outputs it is necessary to invert the above equation. As previously shown, this can be done in a least-squares sense by using the transmission Moore-Penrose inverse, $Z^{\dagger}$. This can then be constructed from the transmission steering matrix:

$$Z^{\dagger} = (D\,D^{\dagger})^{-1}\,D$$

Which yields:

$$\begin{pmatrix} a_1(t) \\ a_2(t) \\ a_3(t) \\ \vdots \\ a_M(t) \end{pmatrix} = Z^{\dagger} \begin{pmatrix} s_1(t) \\ s_2(t) \\ s_3(t) \\ \vdots \\ s_N(t) \end{pmatrix}$$

Thus, the first antenna output signal is simply the elements of the first row of the transmission Moore-Penrose inverse matrix times the outputs of the signal vector. The second antenna output signal is simply the elements of the second row of the Moore-Penrose inverse matrix times the outputs of the signal vector. The third antenna output signal is simply the elements of the third row of the Moore-Penrose inverse matrix times the outputs of the signal vector. And so forth until all the antenna output signals are calculated. These multiply and add operations can be easily performed using dedicated DSP or FPGA chips.

Since the null signals are all zeros, the above calculation can be written more compactly and save computations. First, the signal vector can be rewritten to only include the specific signals and none of the null signals, since these are zeroes. Therefore, the signal vector can be collapsed to length *N-I*. Secondly, the transmission Moore-Penrose inverse matrix, $Z^{\dagger}$, can be partitioned to only include the first *N-I* columns. It is convenient to denote this reduced column transmission Moore-Penrose inverse matrix as $Z^{\dagger}_{MxN-I}$. Now the antenna output vector can be efficiently calculated as:

$$\begin{pmatrix} a_1(t) \\ a_2(t) \\ a_3(t) \\ \vdots \\ a_M(t) \end{pmatrix} = Z^{\dagger}_{MxN-I} \begin{pmatrix} s_1(t) \\ s_2(t) \\ s_3(t) \\ \vdots \\ s_{N-I}(t) \end{pmatrix}$$

Thus, the first antenna output signal is simply the first row of the partitioned transmission Moore-Penrose inverse matrix, $Z^{\dagger}_{MxN-I}$, times the outputs of the collapsed signal vector. The second antenna output signal is simply the second row of the partitioned transmission Moore-Penrose inverse matrix times the outputs of the collapsed signal vector. The third antenna output signal is simply the third row of the partitioned transmission Moore-Penrose inverse matrix times the outputs of the collapsed signal vector. And so forth until all the antenna output signals are calculated. These antenna outputs will result in the transmission of the desired signals in the desired directions and null signals in other defined directions.

Although the present invention has been described as a mathematical method or process with little reference to the analog or digital domains, workers skilled in the art will recognize that the mathematical construct has definite electronic hardware and software correspondence, as is typical with signal and array processing. Changes may be made in form and detail without departing from the spirit and scope of the invention. For example, references to signals generally refer to down converted digitally sampled signals, however the method is general enough to work at analog carrier frequencies.

**Claims**

1.  A method as in Fig. 2 of spatially separating valid GNSS signals and possible interference signals using an antenna array, said method comprising:

    (a) calculating signal time delays on antenna array from direction-of-arrival vectors and array geometry vectors
    (b) constructing steering matrix ($D$) from time delays
    (c) computing Moore-Penrose inverse ($Z$) from said steering matrix

$$Z = (D^\dagger D)^{-1} D^\dagger$$

    (d) separating signals (s) by multiplying said Moore-Penrose inverse (Z) and antenna array data (*a*)

$$\begin{pmatrix} s_1(t) \\ s_2(t) \\ s_3(t) \\ \vdots \\ s_N(t) \end{pmatrix} = Z \begin{pmatrix} a_1(t) \\ a_2(t) \\ a_3(t) \\ \vdots \\ a_M(t) \end{pmatrix}$$

    (e) finding valid satellite navigation signals from set of separated signals by matching signal number to valid satellite direction of arrival.

2.  A method to use spatially separated valid GNSS signals (s) as defined in claim 1 as input to a GNSS receiver to avoid the computational costs and time delay of first detecting and decoding the GNSS signals to determine space vehicle identification numbers.

3.  A method as in Fig. 3 of spatially separating *N* wireless communication reception signals using an array of *M* antenna, said method comprising:

    (a) calculating signal time delays on antenna array from direction-of-arrival vectors and array geometry vectors
    (b) constructing steering matrix ($D$) from time delays
    (c) computing Moore-Penrose inverse matrix ($Z$) from said steering matrix

$$Z = (D^\dagger D)^{-1} D^\dagger$$

    (d) separating signals (s) by multiplying said Moore-Penrose inverse matrix (Z) and antenna array signal vector (*a*)

$$\begin{pmatrix} s_1(t) \\ s_2(t) \\ s_3(t) \\ \vdots \\ s_N(t) \end{pmatrix} = Z \begin{pmatrix} a_1(t) \\ a_2(t) \\ a_3(t) \\ \vdots \\ a_M(t) \end{pmatrix}$$

**4.** A method of spatially separating signals as defined in claim 3, wherein said Moore-Penrose inverse matrix is partitioned such that only the rows corresponding to *N-I* valid wireless communication signals are included to only calculate valid signals. Said method comprising multiplying said partitioned matrix ($Z_{N-IxM}$) and antenna array signal vector (*a*) to yield separated signals of interest (*s*):

$$\begin{pmatrix} s_1(t) \\ s_2(t) \\ s_3(t) \\ \vdots \\ s_{N-I}(t) \end{pmatrix} = Z_{N-IxM} \begin{pmatrix} a_1(t) \\ a_2(t) \\ a_3(t) \\ \vdots \\ a_M(t) \end{pmatrix}$$

**5.** A method as in Fig.4 of spatially separating *N* wireless transmitted communication signals using an *M*-antenna array, said method comprising:

(a) calculating time delays associated with antenna array geometry vectors and signal direction-of-transmission vectors
(b) constructing transmission steering matrix ($D^\dagger$) from time delays
(c) computing transmission Moore-Penrose inverse ($Z^\dagger$) from said steering matrix

$$Z^\dagger = (D\,D^\dagger)^{-1}\,D$$

(d) calculating antenna array signal vector (*a*) by multiplying said transmission Moore-Penrose inverse ($Z^\dagger$) and signals (s)

$$\begin{pmatrix} a_1(t) \\ a_2(t) \\ a_3(t) \\ \vdots \\ a_M(t) \end{pmatrix} = Z^\dagger \begin{pmatrix} s_1(t) \\ s_2(t) \\ s_3(t) \\ \vdots \\ s_N(t) \end{pmatrix}$$

**6.** A method of spatially separating transmitted communication signals as defined in claim 5, wherein said transmission Moore-Penrose inverse matrix is partitioned such that only the columns corresponding to *N-n* valid wireless communication signals are included to calculate antenna array signal vector. Said method comprising multiplying said partitioned matrix ($Z^\dagger_{MxN-n}$) and partitioned signal vector (s) to yield antenna output signals (*a*):

$$\begin{pmatrix} a_1(t) \\ a_2(t) \\ a_3(t) \\ \vdots \\ a_M(t) \end{pmatrix} = Z^\dagger_{MxN\text{-}n} \begin{pmatrix} s_1(t) \\ s_2(t) \\ s_3(t) \\ \vdots \\ s_{N-n}(t) \end{pmatrix}$$

Direction of Arrival of Signals:
all = {$d_1$, $d_2$, … , $d_N$ }
valid = {$d_1$, $d_2$, … , $d_{N-I}$ }
interference = {$d_{N-I+1}$, … , $d_N$ }

Define Antenna Array
Geometry:
{ 0, $x_2$, $x_3$, … , $x_M$ }

Calculate Signal Delays:
$\Delta_{i,j} = x_i \cdot d_j / c$

Construct Steering Matrix:

$$D = \begin{pmatrix} 1 & 1 & 1 & \cdots & 1 \\ \Delta_{12} & \Delta_{22} & \Delta_{32} & & \Delta_{N2} \\ \Delta_{13} & \Delta_{23} & \Delta_{33} & & \Delta_{N3} \\ \vdots & \vdots & \vdots & & \vdots \\ \Delta_{1M} & \Delta_{2M} & \Delta_{3M} & \cdots & \Delta_{NM} \end{pmatrix}$$

Construct Moore-Penrose Beamformer:

$Z = (D^\dagger D)^{-1} D^\dagger$

FIG. 1

Signals Measured at Antenna Array:

$\{ a_1, a_2, a_3, \ldots , a_M \}$

↓

Moore-Penrose Beamformer:

$s = (D^\dagger D)^{-1} D^\dagger a$

↓

Separated Signals:

$\{ s_1, s_2, s_3, \ldots , s_N \}$

↓

Valid SV Signals:

$\{ s_1, s_2, s_3, \ldots , s_{N-I} \}$

Interference Signals:

$\{ s_{N-I+1}, \ldots , s_N \}$

↓

GNSS Receiver

↓

Navigation Data

FIG. 2

FIG. 3

FIG. 4

**REFERENCES CITED IN THE DESCRIPTION**

**Non-patent literature cited in the description**

- **ROY.** Spatial Division Multiple Access Technology and Its Application to Wireless Communication Systems. *47th Vehicular Technology Conference,* 1997
- **MICHAEL JONES.** The Civilian Battlefield: Protecting GNSS Receivers from Interference and Jamming. *Inside GNSS,* March 2011
- Exact and Approximate Time-Shift Operators. *SPIE DSS,* 2009